**Europäisches Patentamt**

**European Patent Office**

**Office européen des brevets**

(19)

(11) Veröffentlichungsnummer: **0 263 150 B1**

(12) # EUROPÄISCHE PATENTSCHRIFT

(45) Veröffentlichungstag der Patentschrift:
**11.09.91 Patentblatt 91/37**

(51) Int. Cl.$^5$: **B29C 67/14**

(21) Anmeldenummer: **87902304.2**

(22) Anmeldetag: **14.04.87**

(86) Internationale Anmeldenummer:
**PCT/AT87/00026**

(87) Internationale Veröffentlichungsnummer:
**WO 87/06183 22.10.87 Gazette 87/23**

(54) **VERFAHREN ZUM HERSTELLEN EINER POLYMEREN KUNSTSTOFF ENTHALTENDEN FOLIE ODER PLATTE.**

(30) Priorität: **14.04.86 AT 957/86**

(43) Veröffentlichungstag der Anmeldung:
**13.04.88 Patentblatt 88/15**

(45) Bekanntmachung des Hinweises auf die
Patenterteilung:
**11.09.91 Patentblatt 91/37**

(84) Benannte Vertragsstaaten:
**AT BE CH DE FR GB IT LI NL SE**

(56) Entgegenhaltungen:
**DE-C- 195 253**
**DE-C- 861 664**
**GB-A- 102 357**
**US-A- 3 163 689**

(73) Patentinhaber: **ISOVOLTA Österreichische**
**Isolierstoffwerke Aktiengesellschaft**
**Industriezentrum-Süd**
**A-2351 Wiener Neudorf (AT)**

(72) Erfinder: **MELCHER, Gerhard**
**Waldgasse 40/24**
**A-1100 Wien (AT)**

(74) Vertreter: **Stampfer, Heinz**
**ISOVOLTA Österreichische Isolierstoffwerke**
**AG Industriezentrum-Süd**
**A-2351 Wiener Neudorf (AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Herstellen einer polymeren Kunststoff enthaltenden Folie oder Platte, in der zumindest ein flächiges, poröses und gegebenenfalls faseriges Trägermaterial eingesetzt ist und die zumindest an einer Seite der das Trägermaterial enthaltenden Schicht und an diese anschließend eine Distanzschicht aus polymerem Kunststoff umfaßt, wobei zum Herstellen der das poröse Trägermaterial enthaltenden Schicht eine niedrigviskose flüssige Kunststoffschicht hergestellt wird, auf die das poröse Trägermaterial aufgebracht wird, das in die flüssige Kunststoffschicht einsinkt oder eingedrückt wird, und wobei die im Laufe des Verfahrens erzeugte Materialschichtung danach unter Polymerisation der in ihr enthaltenen Kunststoffe in die Folie oder dünne Platte übergeführt wird.

Bei einem Verfahren dieser Art, das aus der US-A-3,163.689 bekannt ist, werden Distanzschichten erzeugt, die, wenn sie mit der das Trägermaterial enthaltenden Schicht in Kontakt kommen, bereits zum Teil gehärtet sind, d.h. sie befinden sich dann bei Raumtemperatur in festem Zustand. Zur Herstellung der Distanzschichten werden bei diesem bekannten Verfahren auf bewegten Unterlagen Kunststoffschichten erzeugt, die mit Hilfe von Heizstrahlern auf erhöhte Temperaturen gebracht und dabei verfestigt werden. Zur Bildung der niedrigviskosen flüssigen Kunststoffschicht, in die das poröse Trägermaterial einsinkt oder eingedrückt wird, bringt man den Kunststoff vorzugsweise mit einer Viskosität im Bereich zwischen 100 - 700 centipoise (= mPa.s) bei 25° auf .

Dieses bekannte Verfahren kann aber bei der Herstellung von Folien oder Platten, in denen die Distanzschichten aus einem Kunststoff auf Basis eines Monomers erzeugt wird, das bei Raumtemperatur oder leicht erhöhter Temperatur stark flüchtig ist und/oder bei der sicht der Luftsauerstoff auf die Polymerisation störend auswirkt, nicht eingesetzt werden.

Hier will die Erfindung Abhilfe schaffen. Die Erfindung, wie sie in den Ansprüchen gekennzeichnet ist, löst die Aufgabe, ein Verfahren der eingangs genannten Art anzugeben, das die vorgenannten Nachteile des aus der US-A-3,163.689 bekannten Verfahrens nicht aufweist.

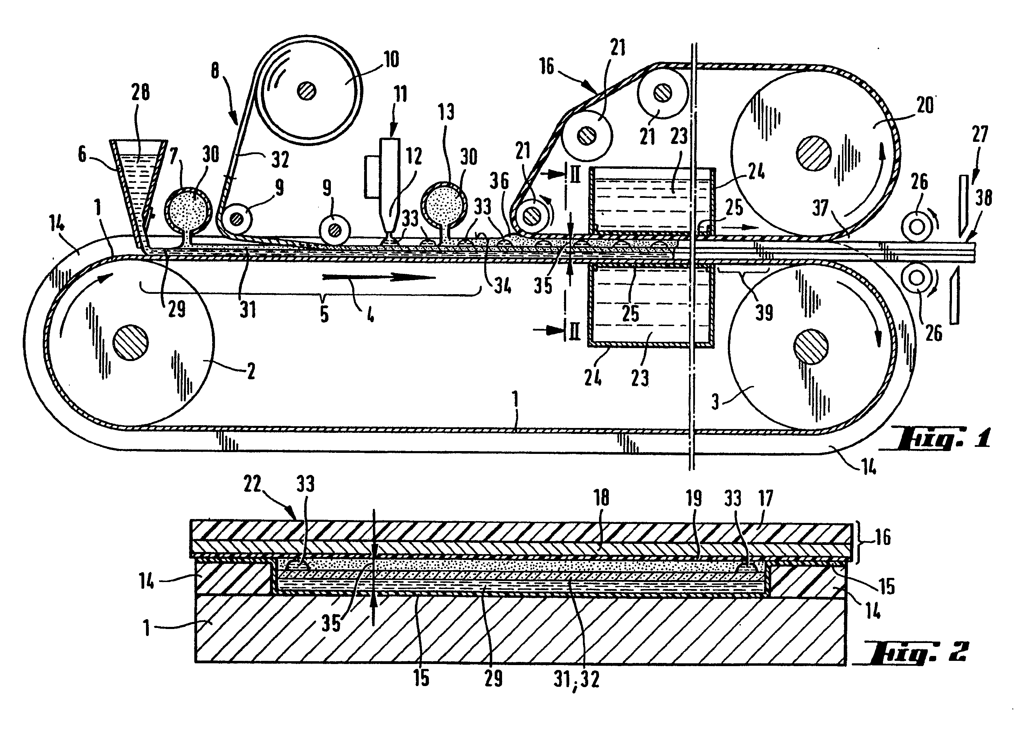

Fig. 1 zeigt in einer schematischen Darstellung eine Vorrichtung für das kontinuierliche Herstellen einer Kunststoffolie aus Polymethylmethacrylat, in welche ein flächiges, faseriges Trägermaterial, insbesondere ein dekorativ bedrucktes und/oder eingefärbtes Papier so eingebettet wird, daß zwischen dem Trägermaterial und den beiden Folienoberflächen jeweils eine aus Polymethylmethacrylat bestehende Distanzschicht konstanter Dicke ausgebildet wird. Die einzelnen Schichten, die zum Aufbau der zu erzeugenden Folie dienen, sind dabei zur besseren Übersichtlichkeit übertrieben dick dargestellt.

Diese Vorrichtung weist ein endloses unteres Transportband 1 aus Stahl auf, das über zwei Walzen 2 und 3 gespannt in Förderrichtung 4 bewegbar ist. Über diesem Transportband 1 sind in einem ersten Bereich 5 - in nachstehender Reihenfolge hintereinander - ein Gießkopf 6, eine erste Auftragsvorrichtung 7, eine Zuführungsstation 8 für das flächige Trägermaterial mit zwei Zuführungsrollen 9 und Vorratsrolle 10, eine Auftragsstation 11 mit in Richtung senkrecht zur Zeichnungsebene oszillierender Auftragsdüse 12, sowie eine zweite Auftragsvorrichtung 13 angeordnet. Das untere Transportband 1 weist in Fig. 2, die einen Schnitt längs der Linie II-II in Fig. 1 zeigt, zu erkennen ist, an seinen beiden Rändern leistenförmige Auflagen 14 auf und ist an seiner Oberseite mit einer Folie 15 aus Polytetrafluoräthylen beschichtet. In Förderrichtung 4 an den Bereich 5 anschließend ist über dem unteren Transportband 1 ein endloses oberes Transportband 16 vorgesehen das aus einem Kunststoffband 17 besteht, das an seiner Unterseite mit einer Aluminiumfolie 18 kaschiert ist, die ihrerseits an der Trägerbandunterseite eine Beschichtung aus einer Polytetrafluoräthylen-Folie 19 aufweist. Dieses Transportband 16, das über eine Walze und Rollen 20 bzw. 21 läuft und das mit seinem wirksamen ebenen Bereich auf den seitlichen Auflagen 14 des unteren Transportbandes 1 aufliegt (siehe Fig. 2), derart, daß es dabei zusammen mit dem unteren Transportband 1 eine scheidenförmige Hülle 22 bildet, die in Förderrichtung 4 bewegbar ist und die am Ende der beiden Transportbänder 1 bzw. 16 wieder aufgetrennt wird. Diese scheidenförmige Hülle 22 durchläuft dabei eine Aushärteeinrichtung, die im wesentlichen aus einem mit einem flüssigen Wärmeträger 23, z.B. Wasser, gefüllten Behälter 24 besteht, wobei die Hülle 22 in einem an ihr eng anliegenden, mit dem Behälter 24 verbundenen flachen Schlauch 25 aus einer dünnen Kunststoffolie gleitet, der einen direkten Kontakt des Wärmeträgers 23 mit der Hülle 22 verhindert. Auf das Ende der beiden Transportbänder 1 bzw. 16 folgen in Förderrichtung 4 schließlich ein Transportrollenpaar 26 sowie eine Schneidevorrichtung 27.

Einige vorteilhafte Wege zur Ausführung der Erfindung

Nachstehend wird nun ein mit Hilfe der Vorrichtung gemäß den Figuren 1 und 2 durchgeführtes Verfahren zum Herstellen einer 0,51 mm starken Folie aus Polymethylmethacrylat beschrieben, in der ein 0,11 mm dickes, an einer Oberflächenseite mit einem dekorativen Aufdruck versehenes Papier eingebettet ist.

Als Ausgangsmaterialien für die Herstellung dieser Folien dienen:

– Ein hochviskoses Präpolymerisat von Monomethylmethacrylat (MMA) mit einer Viskosität bei Raumtemperatur von 40.000 mPa.s. Zur Herstellung dieses Präpolymerisats wird dem MMA 0,015% Azoisobutyronitril (Porofor N der Fa. Bayer) als radikalbildender Vernetzer und 0,18% Mercaptoessigsäure zugegeben und die Präpolymerisation während ca. 100 min bei 88°C durchgeführt, wonach die Polymerisation durch Abkühlung und Hinzufügung einer geringen Menge, z.B. 0,0038%, eines Radikalstoppers abgebrochen wird. Dem so erhaltenden Präpolymerisat, das stabil und längere Zeit lagerfähig ist, werden dann unmittelbar vor Verwendung weitere 4,0% Azoisobutyronitril zugefügt.

- Ein niedrigviskoses Gemisch aus MMA und dem vorstehend beschriebenen lagerfähigen Präpolymerisat mit einer Viskosität bei Raumtemperatur von 75 mPa.s, wobei dieser Viskositätswert durch die zugefügte Menge des Präpolymerisats eingestellt wird. Unmittelbar vor Verwendung werden 4,0% Azoisobutryronitril hinzugefügt.

- Eine bedruckte 0,11 mm dicke Dekorpapierbahn einer Grammatur von 80 g/m² und einer Luftdurchlässigkeit nach Gurley von 20 s.

Für die Durchführung des Verfahrens wird auf das sich mit einer Geschwindigkeit von 0,5 m/min in Förderrichtung bewegende Transportband 1 zunächst mit Hilfe des Gießkopfes 6 hochviskoses MMA-Präpolymerisat 28 in einer als erste Distanzschicht dienende Schicht 29 einer Stärke von 0,2 mm aufgegossen, auf welche dann mittels der Auftragsvorrichtung 7, deren Auftragskopf im wesentlichen aus einem Rohr mit über die Rohrlänge verteilten Auftragsöffnungen besteht, das niedrigviskose Gemisch 30 aus MMA und MMA-Präpolymerisat in Form einer 0,11 mm dicken weiteren Schicht 31 aufgetragen wird. Die beiden übereinanderliegenden Schichten 29 und 31 passieren dann die Zuführungsstation 8, in welcher die von der Vorratsrolle 10 ablaufende Dekorpapierbahn 32 über die Auftragswalze 9 in Förderrichtung 4 abgezogen und dabei zunächst in die Oberfläche der niedrigviskosen Schicht 31 leicht hineingedrückt wird, wonach die Papierbahn 32 von dem niedrigviskosen Gemisch 30 der Schicht 31 rasch durchtränkt wird und auf die Oberseite der Schicht 29 absinkt. Das hochviskose Material der Schicht 29 kann nicht in die Poren des Papiers eindringen, so daß die Papierbahn 32 in konstantem Abstand vom Transportband 1 gehalten wird.

In der Auftragsstation 11 wird nun mittels der Auftragsdüse 12, die über nahezu die ganze Breite der Dekorpapierbahn 28 eine senkrecht zur Förderrichtung 4 verlaufende, oszillierende Bewegung ausführt, ein als zweite Distanzschicht dienender mäanderförmig verlaufender, streifenförmiger Auftrag 33 des hochviskosen Präpolymerisats in einer Dicke von 0,2 mm auf die mit dem niedrigviskosen Gemisch durchtränkte Dekorpapierbahn 32 aufgebracht. Danach wird schließlich mit Hilfe der zweiten Auftragsvorrichtung 13, die ähnlich wie die erste Auftragsvorrichtung 7 ausgeführt ist, der zwischen den Mäanderstreifen des Auftrags 33 bestehende freie Raum mit dem niedrigviskosen Gemisch 30 aufgefüllt und über dem Auftrag 33 noch eine sehr dünne Gemisch-Schicht mit einem freien Flüssigkeitsspiegel 34 gebildet.

Die auf diese Weise zwischen den beiden Auflagen 14 auf das untere Transportband 1 aufgebrachte Materialschichtung 35 wird nun durch das zulaufende obere Transportband 16 abgedeckt, derart, daß die Materialschichtung 36 von der durch die beiden Transportbänder 1 und 16 und die leistenförmigen Auflagen 14 gebildeten scheidenartigen Hülle 22 eng umschlossen wird. Beim Zulauf des oberen Transportbandes 16 auf die Oberfläche des aufgegossenen niedrigviskosen Gemisches 30 entsteht ein Schwall 36, der ein Einziehen von Luftblasen unter das obere Transportband 16 verhindert. Diese Materialschichtung 35 samt der Hülle 22 wird nun durch die etwa 20 m lange Aushärtevorrichtung geführt, in dem Wasser als Wärmeträger 23 auf einer Temperatur von 75°C gehalten wird, so daß die durchlaufende Materialschichtung 35 die Aushärtevorrichtung in etwa 40 min durchläuft. Dabei wird die Materialschichtung 35 zunächst rasch auf etwa die Wärmeträgertemperatur gebracht, bei der die Polymerisation bzw. Aushärtung der Materialschichtung anspringt. Die bei der exothermen Polymerisation bzw. Vernetzungsreaktion entstehende Wärme bewirkt dann bald, daß die Temperatur in der aushärtenden Materialschichtung 35 über die des Wärmeträgers 23 ansteigt, wonach Wärme aus der Materialschichtung 35 in den Wärmeträger 23 abgeführt wird. Aufgrund der hohen spezifischen Wärme des Wärmeträgers wird erreicht, daß der Temperaturanstieg in dem aushärtenden Material nicht zu groß wird. Bei dem vorliegenden Beispiel darf die Temperatur des aushärtenden Materials 100°C nicht übersteigen, da sich sonst in ihm störende Gasbläschen bilden würden.

Die sich bei 37 auftrennende Hülle 22 gibt nun die fertig ausgehärtete Folie 38 frei, welche durch das Transportrollenpaar 26 in Förderrichtung abgezogen und dann gegebenenfalls mit Hilfe der Schneidevorrichtung 27 in Einzelstücke abgelängt und in der Folge abgestapelt wird.

Die vorstehend beschriebene Folie 38 weist zwei Distanzschichten auf, zwischen denen das Dekorpapier zentriert ist. Durch ihren symmetrischen Aufbau hat die Folie keinerlei Roll- oder Schüsselneigung und kann auf vielfältige Weise verwendet oder verarbeitet werden. Eine wichtige Verwendung ist der Einsatz als dekorative Deckfolie bei der Herstellung von Kunstharzschichtpreßstoffplatten, die zur Außenanwendung bestimmt sind. Zur Herstellung solcher Schichtpreßstoffplatten wird z.B. aus mehreren mit einem Phenol-Formaldehydharz imprägnierten Natron-Kraftpapieren und zwei solchen dekorativen Folien auf Basis von Polymethylmethacrylat als Deckschichten ein Stapel geformt, der dann - wie üblich - in einer beheizten Presse bei einem Preßdruck von etwa 700 N/cm² und einer Temperatur von 140°C verpreßt wird. Dabei erweicht das Polymethylmethacrylat und verbindet sich mit den aushärtenden mit Kunstharz imprägnierten Natron-Kraftpapieren zur fertigen Schichtpreßstoffplatte. Außerdem tritt bei dieser Preßtemperatur von 140°C ein Nachhärten des Acrylatkunststoffes ein, wobei - wegen des auch zu Beginn der Nachhärteperiode nur mehr sehr geringen Monomeranteils im Folienmaterial - die Preßtemperatur von 140°C nicht mehr zur Blasenbildung führen kann.

Eine andere vorteilhafte Verwendung der nach dem erfindungsgemäßen Verfahren hergestellten Folien besteht in ihrem Einsatz als dekoratives Beschichtungsmaterial für Trägerplatten, wie Holzspanplatten. Die Beschichtung erfolgt hier entweder durch Aufkleben der Folie oder durch eine sogenannte Direktbeschichtung, bei welcher die Folie entweder direkt oder gemeinsam mit einer Zwischenlage aus einem mit einem Phenolharz imprägnierten Natronkraftpapier heiß mit der Trägerplatte verpreßt wird.

Ein Nachhärten der durch das erfindungsgemäße Verfahren hergestellten Folie kann vorteilhaft auch im Rahmen des kontinuierlichen Folienherstellungsverfahrens erfolgen. Dazu wird z.B. in der anhand von Fig. 1 beschriebenen Vorrichtung der zwischen dem Behälter 24 und den Walzen 3 und 20 liegende, mit 39 angedeutete Bereich entsprechend verlängert und in ihm eine Heißluftheizvorrichtung angeordnet. Beim Durchlauf durch diese Heizvorrichtung werden die beiden Transportbänder 1 und 16 sowie die von ihnen eingeschlossene Folie 38 auf eine Temperatur von 140°C gebracht und die Folie dabei nachgehärtet. Das Nachhärten der durch das erfindungsgemäße Verfahren hergestellten Folie kann statt durch Heißluftbeheizung vorteilhaft auch durch Bestrahlung mit Elektronenstrahlen erfolgen.

Gemäß einer vereinfachten Variante des erfindungsgemäßen Verfahrens kann auch eine Folie erzeugt werden, die nur an einer Seite zwischen Dekorpapier und Folienoberfläche eine Distanzschicht aufweist. Bei dieser Variante werden zunächst die Schichten 29 und 31 sowie die Dekorpapierbahn 32 so wie gemäß Fig. 1 beschrieben aufgebracht, wonach auf die mit niedrigviskosem Gemisch getränkte Dekorpapierbahn eine dünne Schicht desselben niedrigviskosen Gemischs mit Hilfe der Auftragsvorrichtung 13 aufgebracht wird. Der als zweite Distanzschicht dienende mäanderförmig verlaufende Auftrag 33 entfällt also bei dieser Variante. Die Verwendung einer auf diese Weise hergestellten Folie als dekorative Deckfolie erfolgt dann meist so, daß sie an ihrer von der Distanzschicht abgewandten Seite mit einem Trägermaterial verbunden wird. Solche Folien werden vorteilhaft dann eingesetzt, wenn ihre durch die Folien-Unsymmetrie bedingte Rollneigung bei der Verarbeitung nicht stört.

Man kann aber nach einer anderen Verfahrensvariante zur Herstellung einer nur einseitig mit einer Distanzschicht versehenen Folie bei dem anhand der Figuren 1 und 2 beschriebenen Verfahren, den Auftrag des hochviskosen MMA-Präpolymerisats 28 weglassen, d.h. das niedrigviskose Gemisch 30 in Form der Flüssigkeitsschicht 31 direkt auf das untere Transportband 1 aufgießen.

Bei allen vorstehend beschriebenen Verfahrensvarianten ist es wichtig, daß in der Materialschichtung als letzte Schicht ein nierigviskoses Monomer und-/oder Präpolymer aufgetragen wird, das zunächst einen freien Flüssigkeitsspiegel 34 bildet, auf den dann unter Bildung eines Schwalls 36 das obere Transportband 16 aufläuft, wodurch das Einziehen von Luftblasen verhindert wird. Bei Verfahrensvarianten, bei denen die Materialschichtung nicht innerhalb von zwei an sie anliegenden Begrenzungskörpern gehalten wird, also wenn die Oberseite der Materialschichtung während des Polymerisationsvorganges, z.B. in einer trockenen Stickstoffatmosphäre, eine freie Oberfläche bildet, kann auf eine solche oberste Schicht aus einem niedrigviskosen Monomer und-/oder Präpolymer gegebenenfalls auch verzichtet werden.

Die durch das erfindungsgemäße Verfahren hergestellten dekorativen Folien können wegen ihrer Witterungsbeständigkeit insbesondere als Deckfolien bei der Herstellung von Kunstharzschichtpreßstoffplatten, die zur Außenanwendung bestimmt sind, eingesetzt werden.

## Patentansprüche

1. Verfahren zum Herstellen einer polymeren Kunststoff enthaltenden Folie (38) oder Platte, in der zumindest ein flächiges, poröses und gegebenenfalls faseriges Trägermaterial (32) eingesetzt ist und die zumindest an einer Seite der das Trägermaterial (32) enthaltenden Schicht und an diese anschließend eine Distanzschicht aus polymerem Kunststoff umfaßt, wobei zum Herstellen der das poröse Trägermaterial (32) enthaltenden Schicht eine niedrigviskose flüssige Kunststoffschicht (31) hergestellt wird, auf die das poröse Trägermaterial (32) aufgebracht wird, das in die flüssige Kunststoffschicht (31) einsinkt oder eingedrückt wird, und wobei die im Laufe des Verfahrens erzeugte Materialschichtung (35) danach unter Polymerisation der in ihr enthaltenen Kunststoffe in die Folie oder dünne Platte übergeführt wird, dadurch gekennzeichnet, daß auf eine gegebenenfalls ebene Unterlage innerhalb einer Distanzschicht ein polymerisierbarer Kunststoff in fester oder hochviskoser Form mit einer Viskosität von höher als 10.000 mPa.s aufgebracht wird, daß auf diese Distanzschicht dann die niedrigviskose Kunststoffschicht in Form eines niedrigviskosen polymerisierbaren Monomers und-/oder Präpolymers (30) mit einer Viskosität von weniger als 100 mPa.s aufgebracht wird, in die dann das Trägermaterial (32) einsinkt oder eingedrückt wird, und daß gegebenenfalls danach hochviskoser Kunststoff mit einer Viskosität von höher als 10.000 mPa.s zur Bildung einer zweiten Distanzschicht aufgebracht wird.

2. Verfahren nach Anspruch 1, dadurch gekennzeichnet, daß in der zweiten Distanzschicht nach Art eines Flächenmusters angeordnete Bereiche von hochviskosem Kunststoff frei bleiben.

3. Verfahren zum Herstellen einer polymeren Kunststoff enthaltenden Folie (38) oder Platte, in der zumindest ein flächiges, poröses und gegebenenfalls faseriges Trägermaterial (32) eingesetzt ist und die zumindest an einer Seite der das Trägermaterial (32) enthaltenden Schicht und an diese anschließend eine Distanzschicht aus polymerem Kunststoff umfaßt, wobei zum Herstellen der das poröse Trägermaterial (32) enthaltenden Schicht auf eine gegebenenfalls ebene Unterlage eine niedrigviskose flüssige Kunststoffschicht (31) aufgebracht wird, auf die das poröse Trägermaterial (32) aufgebracht wird, das in die flüssige Kunststoffschicht (31) einsinkt oder eingedrückt wird, und wobei die im Laufe des Verfahrens erzeugte Materialschichtung danach unter Polymerisation der in ihr enthaltenen Kunststoffe in die Folie oder dünne Platte übergeführt wird, dadurch gekennzeichnet, daß die niedrigviskose Kunststoffschicht in Form eines niedrigviskosen polymerisierbaren Monomers und/oder Präpolymers (30) mit einer Viskosität von weniger als 100 mPa.s aufgebracht wird, in die dann das Trägermaterial (32) einsinkt oder eingedrückt wird, und daß danach zur Bildung einer Distanzschicht hochviskoser Kunststoff mit einer Viskosität von höher als 10.000 mPa.s aufgebracht wird.

4. Verfahren nach einem der Ansprüche 1 bis 3, dadurch gekennzeichnet, daß bei der Bildung einer Distanzschicht innerhalb von dieser nach Art eines Flächenmusters angeordnete Bereiche von Kunststoff frei bleiben, die danach mit einem aufgebrachten niedrigviskosen Kunststoff aufgefüllt werden.

5. Verfahren nach einem der Ansprüche 1 bis 4, dadurch gekennzeichnet, daß vor der Polymerisation auf die Materialschichtung niedrigviskoses polymerisierbares Monomer und/oder Präpolymer (30) mit einer Viskosität von weniger als 100 mPa.s aufgebracht wird, das einen freien Flüssigkeitsspiegel (34) bildet.

6. Verfahren nach einem der Ansprüche 1 bis 5, dadurch gekennzeichnet, daß der in fester oder hochviskosen Form eingesetzte Kunststoff von derselben Art ist wie das in niedrigviskoser Form eingesetzte Monomer und/oder Präpolymer.

7. Verfahren nach einem der Ansprüche 1 bis 6, dadurch gekennzeichnet, daß zumindest eine der als Schutzschicht dienenden Distanzschichten aus einem transparenten Kunststoff hergestellt wird und-/oder daß das eingesetzte Trägermaterial (32) uni eingefärbt oder zumindest an einer Seite dekorativ bedruckt und/oder beschichtet ist.

8. Verfahren nach einem der Ansprüche 1 bis 7, dadurch gekennzeichnet, daß die Materialschichtung während der Polymerisation auf vorgegebenen Temperaturen gehalten wird.

9. Verfahren nach Anspruch 8, dadurch gekennzeichnet, daß die Materialschichtung durch ein Flüssigkeitsbad, gegebenenfalls ein Wasserbad, auf den vorgegebenen Temperaturen gehalten wird.

10. Verfahren nach einem der Ansprüche 1 bis 9, dadurch gekennzeichnet, daß zumindest innerhalb einer Distanzschicht der hochviskose polymerisierbare Kunststoff in voneinander isolierten, gegebenenfalls punktförmigen Bereichen aufgebracht wird.

11. Verfahren nach einem der Ansprüche 1 bis 10, dadurch gekennzeichnet, daß innerhalb zumindest einer Distanzschicht der hochviskose polymerisierbare Kunststoff in bandförmigen Bereichen aufgebracht wird, die gegebenenfalls mäanderförmig ausgebildet sind.

12. Verfahren nach einem der Ansprüche 1 bis 11, dadurch gekennzeichnet, daß - zum Aufbringen des hochviskosen polymeren Kunststoffes in zumindest einer der Distanzschichten - die Unterlage, auf welche die betreffende Distanzschicht aufzubringen ist, relativ zu einer Auftragsstation für diesen Kunststoff bewegt wird.

13. Verfahren nach Anspruch 12, dadurch gekennzeichnet, daß als Auftragsstation ein Gießkopf (6) verwendet wird.

14. Verfahren nach Anspruch 12, dadurch gekennzeichnet, daß zum Aufbringen des hochviskosen polymerisierbaren Kunststoffes in Form eines mäanderförmigen Bandes die eingesetzte Auftragsstation (11) eine Auftragsdüse (12) aufweist, die eine oszillierende Bewegung quer zur Bewegungsrichtung (4) der Unterlage ausführt.

15. Verfahren nach einem der Ansprüche 1 bis 14, dadurch gekennzeichnet, daß die Materialschichtung (35) zumindest während eines Teiles des Polymerisationsvorganges bis zu ihrer Verfestigung zwischen zwei Begrenzungskörpern gehalten wird.

16. Verfahren nach einem der Ansprüche 1 bis 15, dadurch gekennzeichnet, daß die Kunststoff-Polymerisation in der Materialschichtung (35) innerhalb einer an diese anliegenden scheidenförmigen Hülle erfolgt, welche die Materialschichtung (35) gegen von außen wirkende Einflüsse wie Feuchtigkeit und/oder Wasser abschließt.

17. Verfahren nach einem der Ansprüche 1 bis 16, dadurch gekennzeichnet, daß zur kontinuierlichen Erzeugung der Folie- oder dünnen Platte in Bahnenform die Begrenzungskörper durch zwei Transportbänder (1, 16) gebildet werden.

18. Verfahren nach Anspruch 16 und 17, dadurch gekennzeichnet, daß die scheidenförmigen Hülle durch zueinander parallel verlaufende Abschnitte der Transportbänder (1, 16) gebildet wird, die an den Rändern miteinander verbunden werden oder dort miteinander nur schmale Spalten einschließen.

19. Verfahren nach Anspruch 17 und 18, dadurch gekennzeichnet, daß die zwischen den beiden Transportbändern (1, 16) aufgenommene Materialschichtung (35) durch einen flachen Schlauch gezogen wird, der an den beiden Transportbändern anliegt und diese von dem Wärmeträger des Flüssigkeitsbades trennt.

20. Verfahren nach einem der Ansprüche 1 bis 19, dadurch gekennzeichnet, daß das eingesetzte niedrigviskose polymerisierbare Monomer und/oder Präpolymer (30) und gegebenenfalls der in fester oder hochviskoser Form in den Distanzschichten eingesetzte Kunststoff eines bzw. einer auf Basis von Monomethylmethacrylat ist.

21. Verfahren nach Anspruch 20, dadurch gekennzeichnet, daß der niedrigviskose Kunststoff auf Basis von Monomethylmethacrylat in der oder den Distanzschicht(en) in einer Menge eingesetzt wird, daß in der fertigen Folie (38) die Distanzschichten zumindest an einer Folienseite eine Dicke von mehr als 50μm, vorzugsweise aber von mehr als 100 μm, aufweisen und als Schutzschichten für die Folie (38) dienen.

## Claims

1. Process for producing a film (38) or sheet containing polymer plastic, in which at least one flat, porous and optionally fibrous carrier material (32) is used, and which comprises a separating layer of polymer plastic at least on one side of the layer containing the carrier material (32) and adjoining said layer, whereby to produce the layer containing the porous carrier material (32) a low-viscosity liquid plastic layer (31) is produced to which is applied the porous carrier material (32), which sinks in or is pressed into the liquid plastic layer (31), and whereby the material coating (35) produced in the course of the process is then converted into the film or thin sheet with polymerisation of the plastics contained therein, characterised in that a polymerisable plastic in solid or highly viscous form with a viscosity higher than 10,000 mPa.s is applied to an optionally flat support inside a separating layer, in that to this separating layer the low-viscosity plastic layer in the form of a low-viscosity polymerisable monomer and/or prepolymer (30) with a viscosity of less than 100 mPa.s is then applied, into which the carrier material (32) then sinks or is pressed in, and that optionally thereupon highly viscous plastic with a viscosity of higher than 10,000 mPa.s is applied to form a second separating layer.

2. A process according to Claim 1, characterised in that areas of highly viscous plastic arranged in the manner of a surface pattern in the second separating layer remain free.

3. Process for producing a film (38) or sheet containing polymer plastic, in which at least one flat, porous and optionally fibrous carrier material (32) is used, and which comprises a separating layer of a polymer plastic at least on one side of the layer containing the carrier material (32) and adjoining said layer, whereby to produce the layer containing the porous carrier material (32) a low-viscosity liquid plastic layer (31) is applied to an optionally flat base, to which layer the porous carrier material (32) is applied which sinks in or is pressed into the liquid plastic layer (31), and whereby the material coating produced in the course of the process is then converted into the film or thin sheet with polymerisation of the plastics contained therein, characterised in that the low-viscosity plastic layer is applied in the form of a low-viscosity polymerisable monomer and/or prepolymer (30) with a viscosity of less than 100 mPa.s, into which the carrier material (32) then sinks or is pressed in, and that highly viscous plastic with a viscosity of higher than 10,000 mPa.s is then applied to form a separating layer.

4. A process according to one of Claims 1 to 3, characterised in that in the formation of a separating layer areas of plastic arranged in the manner of a surface pattern remain free therein which are then filled with an applied low-viscosity plastic.

5. A process according to one of Claims 1 to 4, characterised in that prior to the polymerisation, low-viscosity polymerisable monomer and/or prepolymer (30) with a viscosity of less than 100 mPa.s is applied to the material coating, forming a free liquid level (34).

6. A process according to one of Claims 1 to 5, characterised in that the plastic used in solid or highly viscous form is of the same type as the monomer and/or prepolymer used in a low-viscosity form.

7. A process according to one of Claims 1 to 6, characterised in that at least one of the separating layers serving as protective layer is produced from a transparent plastic and/or that the carrier material (32) used is uniformly dyed or decoratively imprinted and/or coated on at least one side.

8. A process according to one of Claims 1 to 7, characterised in that the material coating is kept at preset temperatures during polymerisation.

9. A process according to Claim 8, characterised in that the material coating is kept at these preset temperatures by a liquid bath, optionally a water bath.

10. A process according to one of Claims 1 to 9, characterised in that at least within one separating layer, the highly viscous polymerisable plastic is applied in regions which are isolated from each other and optionally punctiform.

11. A process according to one of Claims 1 to 10, characterised in that within at least one separating layer, the highly viscous polymerisable plastic is applied in strip-shaped regions which are optionally meandering in shape.

12. A process according to one of Claims 1 to 11 characterised in that, for the purpose of applying the highly viscous polymer plastic in at least one of the separating layers, the support to which the respective separating layer is to be applied is moved relative to a coating station for this plastic.

13. A process according to Claim 12, characterised in that a flow head (6) is used as the coating station.

14. A process according to Claim 12, characterised in that for applying the highly viscous polymerisable plastic in the form of a meandering strip, the coating station (11) used has a coating nozzle (12) which performs an oscillating motion transversely to the direction of movement (4) of the support.

15. A process according to one of Claims 1 to 14, characterised in that during at least part of the polymerisation process, the material coating (35) is held between two boundary bodies until its solidification.

16. A process according to one of Claims 1 to 15, characterised in that the polymerisation of the plastic in the material coating (35) takes place inside a sheath-shaped envelope adjacent to it, which seals off the material coating (35) against influences acting from outside, such as humidity and/or water.

17. A process according to one of Claims 1 to 16, characterised in that for the continuous production of the film or thin sheet in web-form, the boundary bodies are formed by two conveyor belts (1, 16).

18. A process according to Claims 16 and 17, characterised in that the sheath-shaped envelope is formed by sections of the conveyor belts (1, 16) running parallel to each other, which are connected to each other at the edges or enclose there only small gaps between them.

19. A process according to Claims 17 and 18, characterised in that the material coating (35) taken up between the two conveyor belts (1, 16) is drawn through a flat hose which adjoins the two conveyor belts and separates them from the heat transfer medium of the liquid bath.

20. A process according to one of Claims 1 to 19, characterised in that the low-viscosity polymerisable monomer and/or prepolymer (30) used and optionally the plastic used in solid or highly viscous form in the separating layers is one on the basis of monomethyl methacrylate.

21. A process according to Claim 20, characterised in that the low-viscosity plastic on the basis of monomethyl methacrylate in the separating layer or layers is used in a quantity such that in the finished film (38) the separating layers have at least on one side a thickness of more than 50μm, but preferably more than 100μm, and serve as protective layers for the film (38).

## Revendications

1. Procédé de préparation d'une feuille (38) ou plaque contenant une matière plastique polymère dans laquelle au moins un matériau support (32) plat, poreux et éventuellement fibreux est incorporé et qui, au moins d'un côté de la couche contenant le matériau support (32) et adjacent à ce côté, comprend une couche de séparation de matière plastique polymère, dans lequel pour préparer la couche contenant le matériau support poreux (32), on prépare une couche (31) de polymère liquide basse viscosité sur laquelle est appliqué le matériau support poreux (38) qui s'enfonce ou est appliqué par pression dans la couche liquide de matière plastique, et dans lequel l'enduction de matière (35) réalisée au cours du procédé est ensuite transformée en feuille ou en plaque mince par polymérisation des matières plastiques qu'il contient, caractérisé en ce que, sur une sous-couche éventuellement plate à l'intérieur d'une couche de séparation on applique une matière plastique polymérisable sous forme solide ou sous forme hautement visqueuse d'une viscosité supérieure à 10 000 mPa.s, que, sur cette couche de séparation, la couche de matière plastique de faible viscosité peut être appliquée sous la forme d'un monomère polymérisable de faible viscosité et/ou d'un prépolymère (30) dont la viscosité est inférieure à 100 mPa.s, couche dans laquelle alors le matériau support (32) s'enfonce ou bien est appliqué par pression, et que, le cas échéant, on applique après cela une matière plastique de haute viscosité dont la viscosité est supérieure à 10 000 mPa.s pour la formation d'une deuxième couche de séparation.

2. Procédé selon la revendication 1, caractérisé en ce que, dans la deuxième couche de séparation, à la nature d'un dessin de surface, subsistent libres des zones de matière plastique de haute viscosité.

3. Procédé de préparation d'une feuille (38) ou d'une plaque contenant une matière plastique polymère dans laquelle est inséré au moins un matériau support (32) plat, poreux et éventuellement fibreux et qui, au moins d'un côté de la couche contenant le matériau support (32) et adjacente à celle-ci, comprend une couche de séparation en matière plastique polymère, dans lequel, pour la préparation de la couche contenant le matériau support (32) poreux, une matière plastique (31) liquide de faible viscosité est appliquée sur une sous-couche éventuellement plate sur laquelle est appliqué le matériau support (32) poreux qui s'enfonce ou est appliqué par pression dans la couche de matière plastique liquide, et dans lequel, l'enduction de matière créée au cours du procédé est ensuite transformée en feuille ou en plaque mince par polymérisation des matières plastiques qu'elle contient, caractérisé en ce que la couche de matière poreuse de faible viscosité est appliquée sous la forme d'un monomère et/ou d'un prépolymère (30) polymérisable, de faible viscosité, dont la viscosité est inférieure à 100 mPa.s, dans laquelle le matériau support (32) s'enfonce ou est imprimé par pression et que, pour la formation d'une couche de séparation, on applique après cela une matière plastique de haute viscosité dont la viscosité est supérieure à 10 000 mPa.s.

4. Procédé selon l'une quelconque des revendications 1 à 3, caractérisé en ce que, lors de la formation d'une couche de séparation, subsistent à l'intérieur de celle-ci, à la façon d'un dessin de surface, des domaines exempts de matière plastique qui sont, après cela, remplis par application d'une matière plastique de faible viscosité.

5. Procédé selon l'une quelconque des revendications 1 à 4, caractérisé en ce que, avant la polymérisation, sur l'enduction de matière, on applique un monomère et/ou un prépolymère (30) polymérisable de faible viscosité dont la viscosité est inférieure à 100 mPa.s et qui forme un niveau de liquide (34) libre.

6. Procédé selon l'une quelconque des revendications 1 à 5, caractérisé en ce que la matière plastique insérée sous forme solide ou sous forme de matière de haute viscosité est de même nature que le monomère et/ou le prépolymère utilisé sous sa forme de basse viscosité.

7. procédé selon l'une quelconque des revendications 1 à 6, caractérisé en ce qu'au moins l'une des couches protectrices servant de couche de séparation est préparée à partir d'une matière plastique transparent et/ou que le matériau support (32) utilisé présente une coloration unie ou, tout au moins sur l'un de ses côtés, qu'il porte une impression décorative et/ou une enduction.

8. Procédé selon l'une quelconque des revendications 1 à 7, caractérisé en ce que l'enduction de matière est maintenue pendant la polymérisation aux températures prédéterminées.

9. Procédé selon la revendication 8, caractérisé en ce que l'enduction de matière est maintenue aux températures prédéterminées grâce à un bain de liquide, le cas échéant grâce à un bain d'eau.

10. Procédé selon l'une quelconque des revendications 1 à 9, caractérisé en ce que, au moins à l'intérieur d'une couche de séparation, la matière plastique polymérisable de haute viscosité est appliquée dans des zones isolées les unes des autres, éventuellement des zones formées de points.

11. Procédé selon l'une quelconque des revendications 1 à 10, caractérisé en ce que, à l'intérieur d'au moins une couche de séparation, la matière polymérisable de haute viscosité est appliquée par une région en forme de bande pouvant, le cas échéant, être formée des méandres.

12. Procédé selon l'une quelconque des revendications 1 à 11, caractérisé en ce que, pour l'application de la matière plastique polymère de haute viscosité, dans au moins l'une des couches de séparation, la sous-couche sur laquelle on doit appliquer la couche de séparation en question se déplace relativement à un poste d'application de cette matière plastique.

13. Procédé selon la revendication 12, caractérisé en ce que l'on utilise, comme poste d'application, une tête de coulée (6).

14. Procédé selon la revendication 12, caractérisé en ce que, pour l'application de la matière plastique polymérisable de haute viscosité sous la forme d'une bande formant des méandres, le poste d'application utilisé (11) comporte une buse d'application (12) qui exécute un mouvement oscillant transversalement à la direction d'avancement (4) de la sous-couche.

15. Procédé selon l'une quelconque des revendications 1 à 14, caractérisé en ce que l'enduction de matière (35), tout au moins pendant une partie du processus de polymérisation, est maintenue entre deux pièces de maintien du calibre jusqu'à sa solidification.

16. Procédé selon l'une quelconque des revendications 1 à 15, caractérisé en ce que la polymérisation de la matière plastique dans l'enduction (35) de matière se fait à l'intérieur d'une coquille en forme de fourreau s'appuyant sur celle-ci et qui protège l'enduction de matière (35) contre les influences agissant de l'extérieur telles que l'humidité et/ou l'eau.

17. Procédé selon l'une quelconque des revendications 1 à 16, caractérisé en ce que, pour la préparation en continu de la feuille ou de la plaque mince sous forme de trace , les pièces pour garantir le calibre sont formées par deux bandes transporteuses (1, 16).

18. Procédé selon la revendication 16 et 17, caractérisé en ce que la coquille en forme de fourreau est formée par des sections des bandes transporteuses (1, 16) parallèles, les bordures de l'une étant liées à celles de l'autre, ou n'enfermant entre elles que des intervalles étroits.

19. Procédé selon les revendications 17 et 18, caractérisé en ce que l'enduction (35) de matière absorbée entre les deux bandes transporteuses (1, 16) est tirée par un tuyau plat qui s'appuie aux deux bandes transporteuses et sépare ces bandes du caloporteur du bain de liquide.

20. Procédé selon l'une quelconque des revendications 1 à 19, caractérisé en ce que le monomère polymérisable et/ou le prépolymère (30) polymérisable et mis oeuvre à faible viscosité et éventuellement le polymère employé dans les couches de séparation, sous forme solide ou hautement visqueux, est une matière plastique en monométhylméthacrylate ou à base de monométhylméthacrylate.

21. Procédé selon la revendication 20, caractérisé en ce que la matière plastique de faible viscosité à base de monométhylméthacrylate est insérée dans la ou les couche(s) de séparation en quantité telle que, dans la feuille finie (38), les couches de séparation au moins d'un côté de la feuille, présentent une épaisseur supérieure à 50 µm, mais de préférence supérieure à 100 µm, et servent de couches protectrices pour la feuille (38).

Fig. 1

Fig. 2

EP 0 263 150 B1